(19) Europäisches Patentamt
European Patent Office
Office européen des brevets

(11) **EP 3 974 207 A1**

(12) **EUROPEAN PATENT APPLICATION**
published in accordance with Art. 153(4) EPC

(43) Date of publication:
**30.03.2022 Bulletin 2022/13**

(21) Application number: **20817941.6**

(22) Date of filing: **06.04.2020**

(51) International Patent Classification (IPC):
**B60C 1/00** (2006.01)  **B60C 11/03** (2006.01)
**C08K 3/36** (2006.01)  **C08L 21/00** (2006.01)

(52) Cooperative Patent Classification (CPC):
**B60C 1/00; B60C 11/03; C08K 3/36; C08L 21/00**

(86) International application number:
**PCT/JP2020/015531**

(87) International publication number:
**WO 2020/246128 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2019 JP 2019105367**

(71) Applicant: **Sumitomo Rubber Industries, Ltd.**
**Kobe-shi, Hyogo 651-0072 (JP)**

(72) Inventors:
• **TOMISAKI, Yukari**
  **Kobe-shi, Hyogo 651-0072 (JP)**
• **KOJIMA, Ryoji**
  **Kobe-shi, Hyogo 651-0072 (JP)**
• **TSUCHIDA, Tsuyoshi**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) A pneumatic tire of the present invention can be provided which comprises a tread formed of a rubber composition comprising 30 to 120 parts by mass of silica having a BET specific surface area of 180 to 280 m²/g based on 100 parts by mass of a rubber component, wherein, when a negative rate within a grounding surface width of the tread is 20-40%, abrasion resistance and wet grip performance are improved, and a high degree of balance with a good fuel efficiency is achieved.

FIG. 1

EP 3 974 207 A1

**Description**

TECHNICAL FIELD

The present invention relates to a pneumatic tire comprising a tread formed of a rubber composition comprising a predetermined amount of a fine particle silica and a rubber component.

BACKGROUND ART

In recent years, due to increasing market demands, a tire has been required to have a longer life and a higher durability, and a tread rubber has been required to have an improved abrasion resistance.

Moreover, at the same time, due to demand for fuel efficiency, reduction in rolling resistance of a tire has been also required, and silica is generally used as a reinforcing filler for a high-performance tire for a passenger car.

On the other hand, in light of safety, there has been also a demand for further improvement of braking performance on a wet road surface, for which a high degree of achievement of contradictory performances of fuel efficiency and wet grip performance has been required.

For example, Patent Document 1 discloses that a pneumatic tire using a rubber composition having a predetermined tan $\delta$ for a tread is made to have a predetermined tread pattern to achieve both reduction in rolling resistance and improvement in wet braking performance.

PRIOR ART DOCUMENT

Patent Document

Patent Document 1: JP 2016-33014 A

SUMMARY OF THE INVENTION

PROBLEM TO BE SOLVED BY THE INVENTION

As such, a method of increasing toughness is considered by increasing specific surface area of a reinforcing filler in order to increase the number of sites to be bonded with a polymer for improved abrasion resistance, though it is still insufficient.

Moreover, in Patent Document 1, abrasion resistance is not particularly improved, and there is still room for improvement.

Therefore, it is an object of the present invention to provide a pneumatic tire having improved abrasion resistance and wet grip performance and good fuel efficiency in a high degree of balance.

MEANS TO SOLVE THE PROBLEM

In view of the above-described problems, the present inventors have found that improved abrasion resistance and wet braking performance and good fuel efficiency in a high degree of balance are achieved by setting a negative rate derived from tread pattern within a predetermined range and at the same time micronizing a reinforcing filler (particularly silica) while increasing a specific surface area thereof , and completed the present invention.

That is, the present disclosure relates to:

[1] A pneumatic tire comprising a tread,

wherein the tread is formed of a rubber composition comprising 30 to 120 parts by mass, preferably 40 to 120 parts by mass, more preferably 50 to 120 parts by mass, further preferably 50 to 110 parts by mass of silica having a BET specific surface area of 180 to 280 $m^2$/g, preferably 190 to 270 $m^2$/g, more preferably 195 to 260 $m^2$/g, further preferably 220 to 260 $m^2$/g, further preferably 220 to 250 $m^2$/g, further preferably 220 to 240 $m^2$/g, further preferably 230 to 240 $m^2$/g, based on 100 parts by mass of a rubber component,

wherein a negative rate within a grounding surface width of the tread is 20-40%, preferably 20-30%, more preferably 20-25%, or preferably 25-35%, more preferably 25-30%,

[2] The pneumatic tire of [1] above, wherein a content of the silica in the rubber composition is 60 to 120 parts by mass, preferably 60 to 110 parts by mass, more preferably 70 to 110 parts by mass, further preferably 80 to 110 parts by mass, further preferably 90 to 110 parts by mass, or preferably 70 to 100 parts by mass, more preferably 80 to 100 parts by mass, further preferably 90 to 100 parts by mass based on 100 parts by mass of the rubber component,

[3] The pneumatic tire of [1] or [2] above, wherein the rubber component in the rubber composition comprises a styrene-butadiene rubber (preferably a solution-polymerized styrene-butadiene rubber, more preferably a modified solution-polymerized styrene-butadiene rubber) and a butadiene rubber (preferably a high cis butadiene rubber with a cis 1,4-bond content of 95% or more),

[4] The pneumatic tire of any one of [1] to [3] above, wherein the rubber composition further comprises a silane coupling agent (preferably a sulfide-based coupling agent, more preferably bis(3-triethoxysilylpropyl)disulfide),

[5] A pneumatic tire comprising a tread,

wherein the tread is formed of a rubber composition comprising 30 to 120 parts by mass, preferably 40 to 120 parts by mass, more preferably 50 to 120 parts by mass, further preferably 60 to 120 parts by mass, or preferably 50 to 110 parts by mass, more preferably 60 to 110 parts by mass, further preferably 70 to 110 parts by mass, further preferably 80 to 110 parts by mass, further preferably 90 to 110 parts by mass, or preferably 70 to 100 parts by mass, more preferably 80 to 100 parts by mass, further preferably 90 to 100 parts by mass of silica having a BET specific surface area of 180 to 280 $m^2/g$, preferably 190 to 270 $m^2/g$, more preferably 195 to 260 $m^2/g$, further preferably 220 to 260 $m^2/g$, further preferably 220 to 250 $m^2/g$, further preferably 220 to 240 $m^2/g$, further preferably 230 to 240 $m^2/g$ based on 100 parts by mass of a rubber component (excluding a rubber composition comprising a rubber component consisting of 100% by mass of styrene-butadiene rubber), wherein a negative rate within a grounding surface width of the tread is 20-40%, preferably 20-30%, more preferably 20-25%, or preferably 25-35%, more preferably 25-30%.

EFFECTS OF THE INVENTION

According to the present invention, a pneumatic tire can be provided which comprises a tread formed of a rubber composition comprising 30 to 120 parts by mass of silica having a BET specific surface area of 180 to 280 $m^2/g$ based on 100 parts by mass of a rubber component wherein a negative rate within a grounding surface width of the tread is 20-40%, whereby improved abrasion resistance and wet braking performance and good fuel efficiency in a high degree of balance can be achieved.

BRIEF DESCRIPTION OF THE DRAWINGS

FIG. 1 is a schematic view showing a tread pattern within a grounding surface width in one embodiment of the present disclosure.
FIG. 2 is a schematic view showing a tread pattern within a grounding surface width in another embodiment of the present disclosure.

EMBODIMENT FOR CARRYING OUT THE INVENTION

The pneumatic tire of the present disclosure comprises a tread formed of a rubber composition comprising 30 to 120 parts by mass of silica having a BET specific surface area of 180 to 280 $m^2/g$ based on 100 parts by mass of the rubber component, wherein a negative rate within a grounding surface width of the tread is 20-40%.

In the pneumatic tire of the present disclosure, a predetermined amount of a fine particle silica having a predetermined specific surface area is used in the rubber composition for tread, and further, a negative rate within a grounding surface width of the tread is set to a predetermined value, whereby it is considered that the fine particle silica enhances reinforcing property of the rubber and that the predetermined negative rate in the tread pattern enables to control an amount of rubber and an amount of area of grounding surface, and further that synergy of these effects achieves improved abrasion resistance and wet braking performance and good fuel efficiency in a high degree of balance.

Besides, in the present specification, a numerical range identified with "to" means to include the numerical values of both ends.

(Negative rate)

In the pneumatic tire of the present disclosure, a ratio of a total groove area within a grounding surface width to a total area within the grounding surface width of a tread (negative rate) is 20% or more, preferably 25% or more.

When the negative rate is less than 20%, a grounding ratio increases, so that rolling resistance increases. Moreover, in that case, a tire weight increases, thereby further deteriorating rolling resistance. Furthermore, when a grounding amount is large, drainage performance cannot be secured, so that wet grip performance tends to deteriorate. In addition, the negative rate in the pneumatic tire of the present disclosure is 40% or less, preferably 35% or less, more preferably 30% or less. When the negative rate exceeds 40%, since a grounding area becomes small, wet grip performance deteriorates, and also since a grounding ratio is small, abrasion resistance tends to deteriorate. Here, the negative rate is preferably 25% or less from the viewpoint that an effect of improving wet grip performance and abrasion resistance can be exhibited more satisfactorily.

Here, the "grounding surface width" is indicated by outermost grounding parts in a tire width direction when a tire is mounted on a normal rim, filled with an internal pressure of 100% air pressure (maximum air pressure) corresponding to the maximum load capacity (load shown in bold in the internal pressure-load capacity correspondence table) for the applicable JATMA YEAR BOOK size/ply rating, and applied with 80% of the maximum load capacity. If TRA standard and ETRTO standard are applied at a place of use or manufacturing, the present invention follows each standard.

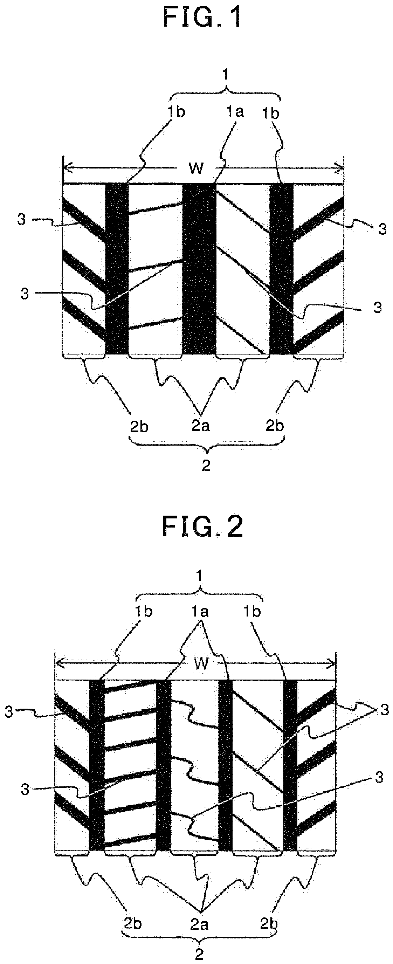

FIGS. 1 and 2 show a tread pattern within a grounding surface width. In such tread pattern, within the grounding surface width W, a plurality of circumferential grooves 1 (three grooves in FIG. 1 and four grooves in FIG. 2) are provided in a tire circumferential direction (tire rotation direction), and land parts 2 (four columns in FIG. 1 and five columns in FIG. 2) partitioned by the circumferential grooves 1 are provided. Moreover, each of the land parts is provided with a width direction groove 3. For example, among them, when two columns of the land parts on outer sides in a tread width direction are defined as shoulder land parts 2b, the land parts sandwiched between the shoulder land parts are defined as crown land parts 2a, the circumferential groove sandwiched between the crown land parts is defined as a crown main groove 1a, and the circumferential grooves sandwiched between one of the shoulder land parts and one of the crown land parts are defined as shoulder main grooves 1b, the width direction grooves of the land parts may be provided on all of the land parts, or may be provided on the shoulder land parts only and on the crown land parts only sipes may be provided. As for shapes of the circumferential groove and the width direction groove, a wide variety of grooves such as a circumferential groove in a trapezoidal wavy zigzag shape and a width direction groove that draws a curve line are known, which are not particularly limited.

The "normal rim" is a rim defined for each tire by the standard in a standard system on which standard the tire is based. For example, it is a "standard rim" in JATMA, "Design Rim" in TRA, or "Measuring Rim" in ETRTO.

The above-mentioned negative rate within the grounding surface width can be obtained by appropriately adjusting means such as mold profile, gauge distribution, and construction, though the means is not particularly limited as long as the negative rate is achieved. For example, the negative rate can be adjusted by appropriately adjusting a width of a circumferential groove and a width of a width direction groove.

(Rubber component)

As a rubber component, a diene-based rubber, a butyl rubber (IIR), or the like can be used. As the diene-based rubber, a natural rubber (NR), a diene-based synthetic rubber, or the like can be used. Examples of the diene-based synthetic rubber include, for example, an isoprene rubber (IR), a butadiene rubber (BR), a styrene-butadiene rubber (SBR), an acrylonitrile-butadiene rubber (NBR), a chloroprene rubber (CR), and the like. These rubber components may be used alone, or two or more thereof may be used in combination. Among them, a NR, a BR or a SBR is preferable, and a BR and a SBR are more preferably used in combination, since they exhibit fuel efficiency and wet grip performance with good balance. Here, it is more preferable that the rubber component comprises a SBR and a BR, and it is further preferable that the rubber component consists of a SBR and a BR only, from the viewpoint that effects of the present disclosure can be exhibited more satisfactorily.

Styrene-butadiene rubber (SBR)

Examples of the SBR include, but not particularly limited to, an emulsion polymerization SBR (E-SBR), a solution polymerization SBR (S-SBR), and the like, and those obtained by modifying these SBRs with a modifying agent (modified SBRs such as a modified E-SBR and a modified S-SBR), hydrogenated ones of these SBRs (hydrogenated SBRs), and the like can also be used. Among them, a S-SBR is preferable, and a modified S-SBR is more preferable. These SBRs may be used alone, or two or more thereof may be used in combination.

Moreover, the modified SBRs may be those modified at a main chain and/or a terminal thereof with a modifying agent or those modified with a polyfunctional modification agent such as, for example, a tin tetrachloride and a silicon tetrachloride and partially having a branched structure. Among them, those modified with a modifying agent having a functional group that interacts with silica at a main chain and/or a terminal thereof are particularly preferable. By using such a modified styrene-butadiene rubber modified with a modifying agent and having a functional group that interacts with silica, fuel efficiency and wet grip performance can be further improved with good balance.

A styrene content (styrene content rate) of the SBR is preferably 15.0% by mass to 40.0% by mass. The styrene content is more preferably 20.0% by mass or more from the viewpoints of rubber strength and grip performance. Moreover, the styrene content is more preferably 30.0% by mass or less from the viewpoint of fuel efficiency. Besides, the styrene content of the SBR is a value calculated by $^1$H-NMR measurement.

A vinyl content (1,2-bond butadiene unit amount) of the SBR is preferably 10.0 to 80.0%. The vinyl content is preferably 25.0% or more, more preferably 40.0% or more, from the viewpoints of rubber strength and grip performance. Moreover, the vinyl content is preferably 75.0% or less, more preferably 70.0% or less, from the viewpoint of fuel efficiency. Besides, the vinyl content of the SBR is a value measured by infrared absorption spectrometry.

When the rubber composition of the tread comprises a SBR, a content of the SBR in 100% by mass of the rubber component is preferably 40% by mass or more, more preferably 50% by mass or more, further preferably 60% by mass or more. When the content of the SBR is 40% by mass or more, wet grip performance required for the tread rubber tends to be easily secured. Moreover, the content of the SBR in 100% by mass of the rubber component is preferably 95% by mass or less, more preferably 90% by mass or less, further preferably 85% by mass or less. When the content of the SBR is 95% by mass or less, abrasion resistance and rolling resistance tend to be improved. Besides, when two or more types of SBR are used in combination, a total content of all SBRs shall be a content of SBRs in the rubber component. Here, from the viewpoint that the effects of the present disclosure can be exhibited more satisfactorily, it is preferable that the rubber component of the rubber composition is not 100% by mass of styrene-butadiene rubber.

Butadiene rubber (BR)

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Among them, it is more preferable to use a high cis BR from the viewpoint of abrasion resistance.

Examples of the high cis BR include, for example, high cis BRs manufactured and sold by JSR Corporation, Zeon Corporation, Ube Industries, Ltd., etc., and the like. Among high cis BRs, those having a cis 1,4 bond content of 95% or more are more preferable, those having a cis 1,4 bond content of 96% or more are more preferable, and those having a cis 1,4 bond content of 97% or more are further preferable. They may be used alone, or two or more thereof may be used in combination. When a high cis BR is compounded, low temperature characteristics and abrasion resistance can be improved. A cis 1,4 bond content in a BR is a value calculated by infrared absorption spectrometry.

When the rubber composition of the tread comprises a BR, a content of the BR in 100% by mass of the rubber component is preferably 5% by mass or more, more preferably 10% by mass or more, further preferably 15% by mass or more. When the content of the BR is 5% by mass or more, a balance of abrasion resistance and rolling resistance tends to become improved. Moreover, the content of the BR in 100% by mass of the rubber component is preferably 60% by mass or less, more preferably 50% by mass or less, further preferably 40% by mass or less. When the content of the BR is 60% by mass or less, wet grip performance tends to become improved.

A total content of the SBR and the BR in 100% by mass of the rubber component is preferably 80% by mass or more, more preferably 90% by mass or more, further preferably 100% by mass. When the total content of the SBR and the BR is 80% by mass or more, a good balance of wet grip performance, abrasion resistance, and low heat generation can be maintained.

(Silica)

Examples of silica include, but not particularly limited to, for example, a dry silica (anhydrous silica), a wet silica (hydrous silica), and the like. Among them, a wet silica is preferable since it has many silanol groups and many reaction points with a silane coupling agent. In the present disclosure, silica having a BET specific surface area ($N_2SA$) of 180 to 280 $m^2/g$ is used. Silica may be used alone, or two or more thereof may be used in combination. Examples of silica include, for example, silica manufactured and sold by Evonik Degussa GmbH, Solvay, Tosoh Silica Corporation, Tokuyama Corporation, etc.

The BET specific surface area of silica is 180 $m^2/g$ or more, preferably 190 $m^2/g$ or more, more preferably 195 $m^2/g$ or more, further preferably 220 $m^2/g$ or more, most preferably 230 $m^2/g$ or more. When the BET specific surface area of silica is less than 180 $m^2/g$, reinforcing property of a rubber required for a tire cannot be secured, and abrasion resistance cannot be secured. Moreover, the BET specific surface area of silica is 280 $m^2/g$ or less, preferably 270 $m^2/g$ or less, more preferably 260 $m^2/g$ or less, further preferably 250 $m^2/g$ or less, further preferably 240 $m^2/g$ or less. When the BET specific surface area of silica exceeds 280 $m^2/g$, processability deteriorates, which makes processing difficult. Besides, the BET specific surface area of silica in the present specification is a value measured by a BET method according to ASTM D3037-93.

A content of silica based on 100 parts by mass of the rubber component is 30 parts by mass or more, preferably 40 parts by mass or more, more preferably 50 parts by mass or more, further preferably 60 parts by mass or more, further preferably 70 parts by mass or more, further preferably 80 parts by mass or more, most preferably 90 parts by mass or more. When the content of silica is less than 30 parts by mass, reinforcing property required for a tire cannot be obtained. Moreover, the content of silica based on 100 parts by mass of the rubber component is 120 parts by mass or less, preferably 110 parts by mass or less, more preferably 100 parts by mass or less. When the content of silica exceeds 120 parts by mass, processability deteriorates, which makes processing difficult.

(Silane coupling agent)

It is preferable to use a silane coupling agent in order to comprise silica. Examples of the silane coupling agent include, for example, sulfide-based silane coupling agents such as bis(3-triethoxysilylpropyl)disulfide and bis(3-triethoxysilylpropyl)tetrasulfide, mercapto-based silane coupling agents such as 3-mercaptopropyltrimethoxysilane and 3-mercaptopropyltriethoxysilane, thioether-based silane coupling agents such as 3-octanoylthio-1-propyltriethoxysilane, 3-hexanoylthio-1-propyltriethoxysilane, and 3-octanoylthio-1-propyltrimethoxysilane, vinyl-based silane coupling agents such as vinyltriethoxysilane, amino-based silane coupling agents such as 3-aminopropyltriethoxysilane, glycidoxy-based silane coupling agents such as $\gamma$-glycidoxypropyltriethoxysilane, nitro-based silane coupling agents such as 3-nitropropyltrimethoxysilane, and chloro-based silane coupling agents such as 3-chloropropyltrimethoxysilane. They may be used alone, or two or more thereof may be used in combination. Among them, sulfide-based coupling agents, particularly bis(3-triethoxysilylpropyl)disulfide are preferable from the viewpoints of ease of temperature control of reaction with silica and an effect of improving reinforcing property of a rubber composition.

When the rubber composition comprises a silane coupling agent, a content of the silane coupling agent is preferably 1 part by mass or more, more preferably 2 parts by mass or more, based on 100 parts by mass of silica. When the content of the silane coupling agent is 1 part by mass or more, viscosity of an unvulcanized rubber composition tends to be suppressed, and deterioration of processability tends to be suppressed. Moreover, the content of the silane coupling agent based on 100 parts by mass of silica is preferably 20 parts by mass or less, more preferably 15 parts by mass or less, further preferably 12 parts by mass or less. When the content of the silane coupling agent is 20 parts by mass or less, there is a tendency that a compounding effect of the silane coupling agent commensurate with cost can be obtained.

(Other compounding agents)

The rubber composition for tread can appropriately comprise rubber components other than diene-based rubbers, and compounding agents commonly used in the conventional rubber industry, for example, reinforcing fillers other than silica, various softening agents, a tackifying resin, various antioxidants, wax, zinc oxide, stearic acid, a vulcanizing agent, a vulcanization accelerator, and the like, as necessary, in addition to the above-described components.

(Reinforcing fillers other than silica)

As reinforcing fillers other than silica, those conventionally used in the rubber composition for tire such as, carbon black, calcium carbonate, alumina, clay, and talc can be compounded. When those other than silica are used as reinforcing fillers, carbon black is preferable from the viewpoint of rubber strength. That is, it is more preferable to comprise silica and carbon black as reinforcing fillers, and more preferable to comprise silica and carbon black only.

Carbon black

Carbon black is not particularly limited, and GPF, FEF, HAF, ISAF, SAF, and the like can be used alone, or two or more thereof can be used in combination. Examples of carbon black include carbon black manufactured and sold by Asahi Carbon Co., Ltd., Cabot Japan K.K., Tokai Carbon Co., Ltd., Mitsubishi Chemical Corporation, Lion Corporation, Nippon Steel Chemical Carbon Co., Ltd., Columbian Carbon Japan Ltd., etc.

A nitrogen adsorption specific surface area ($N_2SA$) of carbon black is preferably 80 $m^2$/g or more, more preferably 100 $m^2$/g or more, further preferably 110 $m^2$/g or more. Moreover, the $N_2SA$ is preferably 300 $m^2$/g or less, more preferably 250 $m^2$/g or less. Besides, the $N_2SA$ of carbon black can be measured according to JIS K 6217-2: "Carbon black for rubber industry-Fundamental characteristics-Part 2: Determination of specific surface area-Nitrogen adsorption methods-Single-point procedures".

A content of carbon black when compounded based on 100 parts by mass of the rubber component is preferably 1 part by mass or more, more preferably 5 parts by mass or more, further preferably 8 parts by mass or more, based on 100 parts by mass of the rubber component. The content of carbon black based on 100 parts by mass of the rubber component is preferably 50 parts by mass or less, more preferably 30 parts by mass or less, further preferably 15 parts by mass or less, further preferably 10 parts by mass or less. When the content of carbon black is within the above-described ranges, good fuel efficiency and weather resistance can be obtained.

<Softening agent>

Examples of the softening agent include petroleum-based softening agents such as oil, a lubricating oil, paraffin, a liquid paraffin, a petroleum asphalt, and vaseline, fatty oil-based softening agents such as a soybean oil, a palm oil, a castor oil, a flaxseed oil, a rapeseed oil, and a coconut oil, wax such as a tall oil, factice, beeswax, a carnauba wax, and lanolin, fatty acids such as linoleic acid, palmitic acid, stearic acid, and lauric acid, a liquid polymer, a low-temperature plasticizer, and the like. A total compounding amount of softening agents is preferably 100 parts by mass or less based on 100 parts by mass of the rubber component. In this case, there is little risk of deteriorating wet grip performance.

Oil

Examples of oil include, for example, a process oil such as a paraffin-based, aroma-based, and naphthene-based process oil.

A content of oil when compounded based on 100 parts by mass of the rubber component is preferably 10 parts by mass or more, more preferably 15 parts by mass or more. Moreover, the content of oil is preferably 60 parts by mass or less, more preferably 55 parts by mass or less, based on 100 parts by mass of the rubber component. When the content of oil is within the above-described ranges, an effect of compounding oil can be sufficiently obtained, and a good abrasion resistance can be obtained. Besides, in the present specification, the content of oil also includes an amount of oil contained in an oil-extended rubber.

Liquid polymer

Examples of the liquid polymer include, for example, a liquid SBR, a liquid BR, a liquid IR, a liquid SIR, and the like. Among them, it is particularly preferable to use a liquid SBR because it can improve durability and grip performance with good balance.

Low-temperature plasticizer

Examples of the low-temperature plasticizer include, for example, liquid components such as dioctyl phthalate (DOP), dibutyl phthalate (DBP), tris(2-ethylhexyl)phosphate (TOP), and bis(2-ethylhexyl)sebacate (DOS).

(Tackifying resin)

Examples of the tackifying resin include a cyclopentadiene-based resin, a coumarone resin, a petroleum-based resin (an aliphatic petroleum resin, an aromatic petroleum resin, an alicyclic petroleum resin, etc.), a phenol-based resin, a rosin derivative, and the like.

Examples of the aromatic petroleum resin include, for example, the following aromatic vinyl-based resin and C9-based petroleum resin other than the aromatic vinyl-based resin, and the like.

The aromatic vinyl-based resin may include a homopolymer of an aromatic vinyl monomer (unit) and a copolymer of two or more kinds of the aromatic vinyl monomers which includes, for example, styrene, $\alpha$-methylstyrene, 1-vinyl-naphthalene, 3-vinyltoluene, ethylvinylbenzene, divinylbenzene, 4-cyclohexylstyrene, 2,4,6-trimethylstyrene, and the like. Moreover, those obtained by modifying them may be used.

A content of the tackifying resin when compounded based on 100 parts by mass of the rubber component is preferably 1 part by mass or more, more preferably 2 parts by mass or more, further preferably 3 parts by mass or more, particularly preferably 4 parts by mass or more, from the viewpoints of wet grip performance and dry grip performance. Moreover, the content of the tackifying resin, particularly the aromatic vinyl-based resin, based on 100 parts by mass of the rubber component is preferably 50 parts by mass or less, more preferably 40 parts by mass or less, further preferably 35 parts by mass or less, from the viewpoints of abrasion resistance, fuel efficiency, and brittle fracture at a low temperature.

(Antioxidant)

The antioxidant is not particularly limited, and for example, amine-based, phenol-based, and imidazole-based compounds, and antioxidants such as a carbamic acid metal salt can be appropriately selected and compounded as antioxidants, which may be used alone or two or more of which may be used in combination. Among them, an amine-based antioxidant is preferable because it has a high antiaging effect, p-phenylenediamine-based antioxidants are more preferable such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and N-(1,3-dimethylbutyl)-N'-phenyl-p-phenylenediamine is particularly preferable.

A content of the antioxidant when compounded based on 100 parts by mass of the rubber component is preferably 0.5 parts by mass or more, more preferably 1 part by mass or more. Moreover, the content of the antioxidant based on 100 parts by mass of the rubber component is preferably 5 parts by mass or less, more preferably 3 parts by mass or less. When the content of the antioxidant is within the above-described ranges, an antiaging effect can be sufficiently obtained, and discoloration due to precipitation of the antioxidant on a tire surface tends to be suppressed.

As stearic acid, zinc oxide, wax, etc., those conventionally used in the rubber industry can be used.

(Vulcanizing agent)

The rubber composition can comprise a vulcanizing agent. As the vulcanizing agent, an organic peroxide or a sulfur-based vulcanizing agent can be used. As the organic peroxide, for example, benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexin-3, 1,3-bis(t-butylperoxypropyl)benzene, or the like can be used. Moreover, as the sulfur-based vulcanizing agent, for example, sulfur, morpholine disulfide, or the like can be used. Among them, sulfur is preferable.

A content of the vulcanizing agent when compounded based on 100 parts by mass of the rubber component is preferably 0.5 parts by mass or more, more preferably 1 part by mass or more. Moreover, the content of the vulcanizing agent based on 100 parts by mass of the rubber component is preferably 5 parts by mass or less, more preferably 3 parts by mass or less. When the content of the vulcanizing agent is within the above-described ranges, an appropriate fracture characteristics can be obtained, and abrasion resistance tends to become improved.

(Vulcanization accelerator)

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, it is preferable to comprise sulfenamide-based vulcanization accelerators and guanidine-based vulcanization accelerators, and it is more preferable to comprise sulfenamide-based vulcanization accelerators and guanidine-based vulcanization accelerators only, from the viewpoint that the effects of the present disclosure can be obtained more appropriately.

Examples of the sulfenamide-based vulcanization accelerator include CBS (N-cyclohexyl-2-benzothiazolyl sulfenamide), TBBS (N-t-butyl-2-benzothiazyl sulfenamide), N-oxyethylene-2-benzothiazyl sulfenamide, N,N'-diisopropyl-2-benzothiazyl sulfenamide, N,N-dicyclohexyl-2-benzothiazyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, it is preferable to use CBS and DPG in combination from the viewpoint that the effects of the present disclosure can be obtained more appropriately.

A content of the vulcanization accelerator when compounded based on 100 parts by mass of the rubber component is preferably 0.1 parts by mass or more, more preferably 0.3 parts by mass or more, further preferably 0.5 parts by mass or more. The content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, an appropriate fracture characteristics can be obtained, and abrasion resistance tends to become improved.

(Hardness)

A hardness of a tread obtained by using the above-described rubber composition is preferably 55 degrees or more, more preferably 60 degrees or more, further preferably 65 degrees or more, in terms of JIS-A hardness. When the hardness is 55 degrees or more, there is a tendency that rigidity of a rubber required for a tread rubber can be secured. Moreover, the hardness is preferably 80 degrees or less, more preferably 75 degrees or less, further preferably 70 degrees or less. When the hardness is 80 degrees or less, energy input to a tire is mitigated, and there is a tendency that deterioration of abrasion resistance can be prevented.

Producing method of rubber composition for tread

The rubber composition for tread can be produced by a general method. For example, it can be produced by a method of kneading components other than vulcanizing agents and vulcanization accelerators, of the above-described components, with a known kneading machine used in the general rubber industry such as a Banbury mixer, a kneader, and an open roll (a base kneading step), then adding the vulcanizing agents and the vulcanization accelerators to the mixture to further knead them (a finish kneading step), followed by vulcanizing them, and the like.

A kneading condition is not particularly limited, and for the base kneading step, kneading at a discharge temperature from 150 to 165°C, preferably 155°C to 160°C for 3 to 10 minutes, preferably 4 to 6 minutes is preferable, and for the finish kneading step, kneading at 70 to 90°C for 1 to 5 minutes, preferably 2 to 4 minutes is preferable. A vulcanization condition is not particularly limited, and vulcanizing at 170 to 180°C for 12 to 18 minutes, preferably 13 to 16 minutes is preferable.

Producing method of pneumatic tire

The pneumatic tire can be manufactured by a usual method using the above-mentioned rubber composition for tread. That is, the tire can be produced by extruding the above-described rubber composition, which is obtained by compounding the above-mentioned compounding agents as necessary based on the rubber components, into a shape of a tread, etc., attaching it together with other tire members on a tire forming machine, and molding them by a usual method to form an unvulcanized tire, followed by heating and pressurizing this unvulcanized tire in a vulcanizing machine. The tread can also be formed by a method of attaching sheet-shaped unvulcanized rubber compositions together into a predetermined shape or a method of inserting them into two or more extruders to form into two phases at a head outlet of the extruders.

The pneumatic tire can be used for general tires such as a tire for a passenger car, a high-performance tire for a passenger car, a heavy duty tire for truck and bus, and a racing tire. Among them, a high-performance tire for a passenger car is preferable from the viewpoint of compounding with silica.

EXAMPLE

Hereinafter, the present disclosure will be described based on Examples, though the present disclosure is not limited to these Examples.

Various chemicals used in Examples and Comparative examples are collectively shown below.

- SBR: Nipol NS616 manufactured by ZS Elastomer Co., Ltd. (terminal-modified solution-polymerized SBR, styrene content: 21% by mass, vinyl content: 66%)
- BR: Nipol BR1220 manufactured by Zeon Corporation (cis 1,4 bond content: 97%)
- Carbon black: DIABLACK (Registered Trademark) N220 manufactured by Mitsubishi Chemical Corporation (nitrogen adsorption specific surface area ($N_2SA$): 115 $m^2$/g)
- Silica 1: ULTRASIL (Registered Trademark) 9100GR manufactured by Evonik Degussa GmbH (BET specific surface area: 235 $m^2$/g, average primary particle size: 15 nm)
- Silica 2: Zeosil (Registered Trademark) Premium 200 MP manufactured by Solvay (BET specific surface area: 220 $m^2$/g, average primary particle size: 16 nm)
- Silica 3: ULTRASIL (Registered Trademark) VN3 manufactured by Evonik Degussa GmbH (BET specific surface area: 175 $m^2$/g, average primary particle size: 18 nm)
- Silane coupling agent: Si266 manufactured by Evonik Degussa GmbH (bis(3-triethoxysilylpropyl)disulfide)
- Zinc oxide: Zinc oxide No. 1 manufactured by Mitsui Mining & Smelting Co., Ltd.
- Stearic acid: Bead stearic acid "CAMELLIA" manufactured by NOF CORPORATION
- Oil: Process X-140 manufactured by Japan Energy Corporation
- Antioxidant: Antigen 6C manufactured by Sumitomo Chemical Co., Ltd. (N-(1,3-dimethylbutyl)-N'-phenyl-p-phenylenediamine)
- Wax: SUNNOC N manufactured by Ouchi Shinko Chemical Industry Co., Ltd.
- Sulfur: Powdered sulfur manufactured by Karuizawa Sulfur Co, Ltd.

- Vulcanization accelerator 1: Nocceler CZ manufactured by Ouchi Shinko Chemical Industry Co., Ltd. (N-cyclohexyl-2-benzothiazolylsulfenamide)
- Vulcanization accelerator 2: Nocceler D manufactured by Ouchi Shinko Chemical Industry Co., Ltd. (1,3-diphenylguanidine)

Examples 1 to 15 and Comparative examples 1 to 5

According to the compounding formulations shown in Tables 1 and 2, using a 1.7 L Banbury mixer manufactured by Kobe Steel, Ltd., chemicals other than sulfur and vulcanization accelerators were charged and kneaded for 5 minutes so that a discharge temperature reached 155°C. Next, sulfur and vulcanization accelerators were added to the obtained kneaded product in the compounding amounts shown in Tables 1 and 2, and then the mixture was kneaded under a condition at about 80°C for 3 minutes using an open roll to obtain an unvulcanized rubber composition. The obtained unvulcanized rubber composition was molded into a tread shape, attached together with other members, and vulcanized at 170°C for 15 minutes, thereby obtaining a pneumatic tire (size 195/65R15) of each Example and Comparative example. Moreover, tread patterns of the tires of Examples 1 to 10 and Comparative examples 1 to 5 are as shown in FIG. 1, tread patterns of the tires of Examples 11 to 15 are as shown in FIG. 2, and widths of the circumferential groove 1 and/or the width direction groove 3 of each tire were adjusted so that a negative rate of each tire was as shown in Tables 1 and 2.

The pneumatic tire obtained in each Example and Comparative example was evaluated by the methods shown below in terms of fuel efficiency, abrasion resistance, and wet grip performance. The results are shown in Tables 1 and 2. Moreover, an average of all evaluation indexes is shown as an "Average" in Tables 1 and 2.

<Fuel efficiency index>

Using a rolling resistance tester, rolling resistance when each tire was run with a rim of 15 × 6JJ, an internal pressure of 230 kPa, a load of 3.43 kN, and a speed at 80 km/h was measured, and the measurement was indicated as an index as Comparative example 1 being 100. The results show that the larger the index is, the better the fuel efficiency is, and 80 or more shall be a good index.

<Abrasion resistance index>

Each tire (size 195/65R15) was mounted on a domestic FF vehicle, and a groove depth of the tire tread part after running of 8000 km was measured to calculate a running distance when the groove depth of the tire was reduced by 1 mm, and the result of calculation was indicated as an index by the following equation. The larger the index is, the better the abrasion resistance is.

$$\text{(Abrasion resistance index)} = \text{(running distance when a groove depth of each compounding is reduced by 1 mm)} / \text{(running distance when a groove depth of Comparative example 1 is reduced by 1 mm)} \times 100$$

<Wet grip performance index>

Based on a braking performance obtained by an anti-lock braking system (ABS) evaluation test, grip performance was evaluated. That is, a test tire was mounted on a passenger car equipped with a 1800 cc class ABS, an actual vehicle running was performed on an asphalt road surface (in a wet road surface condition, skid number: about 50), and a brake was applied at a speed of 100 km/h to calculate deceleration until the passenger car stopped. Here, deceleration is a distance until a passenger car stops. Then, as wet grip performance index of Comparative example 1 being 100, deceleration was indicated as an index by the following equation. The results show that the larger the index is, the better the braking performance is, and the more excellent the wet grip performance is.

$$\text{(Wet grip performance index)} = \text{(deceleration of Comparative example 1)} / \text{(deceleration of each compounding)} \times 100$$

Table 1

| | Example | | | | | | | | | |
|---|---|---|---|---|---|---|---|---|---|---|
| | 1 | 2 | 3 | 4 | 5 | 6 | 7 | 8 | 9 | 10 |
| **Compounding amount (part by mass)** | | | | | | | | | | |
| SBR | 70 | 70 | 70 | 70 | 70 | 70 | 70 | 70 | 70 | 70 |
| BR | 30 | 30 | 30 | 30 | 30 | 30 | 30 | 30 | 30 | 30 |
| Carbon black | 10 | 10 | 10 | 10 | 10 | 10 | 10 | 10 | 10 | 10 |
| Silica 1 | 70 | 70 | 70 | 50 | 90 | 110 | - | - | - | - |
| Silica 2 | - | - | - | - | - | - | 70 | 70 | 70 | 100 |
| Silica 3 | - | - | - | - | - | - | - | - | - | - |
| Silane coupling agent | 8.4 | 8.4 | 8.4 | 6.0 | 10.8 | 15.4 | 8.4 | 8.4 | 8.4 | 13.0 |
| Oil | 25 | 25 | 25 | 25 | 25 | 25 | 25 | 25 | 25 | 25 |
| Wax | 2 | 2 | 2 | 2 | 2 | 2 | 2 | 2 | 2 | 2 |
| Antioxidant | 2 | 2 | 2 | 2 | 2 | 2 | 2 | 2 | 2 | 2 |
| Stearic acid | 2.5 | 2.5 | 2.5 | 2.5 | 2.5 | 2.5 | 2.5 | 2.5 | 2.5 | 2.5 |
| Zinc oxide | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 |
| Vulcanization accelerator 2 | 1.5 | 1.5 | 1.5 | 1.5 | 1.5 | 1.5 | 1.5 | 1.5 | 1.5 | 1.5 |
| Negative rate (%) | 25 | 20 | 40 | 25 | 25 | 20 | 25 | 30 | 35 | 25 |
| **Evaluation** | | | | | | | | | | |
| Fuel efficiency index | 95 | 90 | 120 | 110 | 90 | 80 | 95 | 105 | 110 | 85 |
| Abrasion resistance index | 125 | 130 | 108 | 105 | 130 | 130 | 125 | 125 | 120 | 130 |
| Wet grip performance index | 115 | 120 | 105 | 115 | 140 | 145 | 115 | 110 | 110 | 140 |
| Average | 112 | 113 | 111 | 110 | 120 | 118 | 112 | 113 | 113 | 118 |

Table 2

| | Example | | | | | Comparative example | | | | |
|---|---|---|---|---|---|---|---|---|---|---|
| | 11 | 12 | 13 | 14 | 15 | 1 | 2 | 3 | 4 | 5 |
| **Compounding amount (part by mass)** | | | | | | | | | | |
| SBR | 70 | 70 | 70 | 70 | 70 | 70 | 70 | 70 | 70 | 70 |
| BR | 30 | 30 | 30 | 30 | 30 | 30 | 30 | 30 | 30 | 30 |
| Carbon black | 10 | 10 | 10 | 10 | 10 | 10 | 10 | 10 | 10 | 10 |
| Silica 1 | 70 | 70 | 70 | 50 | 90 | - | 70 | 70 | 20 | 140 |
| Silica 2 | - | - | - | - | - | - | - | - | - | - |
| Silica 3 | - | - | - | - | - | 70 | - | - | - | - |
| Silane coupling agent | 8.4 | 8.4 | 8.4 | 6.0 | 10.8 | 5.6 | 8.4 | 8.4 | 2.4 | 19.6 |
| Oil | 25 | 25 | 25 | 25 | 25 | 25 | 25 | 25 | 25 | 25 |
| Wax | 2 | 2 | 2 | 2 | 2 | 2 | 2 | 2 | 2 | 2 |
| Antioxidant | 2 | 2 | 2 | 2 | 2 | 2 | 2 | 2 | 2 | 2 |
| Stearic acid | 2.5 | 2.5 | 2.5 | 2.5 | 2.5 | 2.5 | 2.5 | 2.5 | 2.5 | 2.5 |
| Zinc oxide | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 |
| Vulcanization accelerator 2 | 1.5 | 1.5 | 1.5 | 1.5 | 1.5 | 1.5 | 1.5 | 1.5 | 1.5 | 1.5 |
| Negative rate (%) | 25 | 20 | 40 | 25 | 25 | 25 | 10 | 50 | 25 | 25 |

(continued)

| | Example | | | | | Comparative example | | | | |
|---|---|---|---|---|---|---|---|---|---|---|
| | 11 | 12 | 13 | 14 | 15 | 1 | 2 | 3 | 4 | 5 |
| Evaluation | | | | | | | | | | |
| Fuel efficiency index | 98 | 95 | 125 | 115 | 95 | 100 | 45 | 105 | 130 | 55 |
| Abrasion resistance index | 120 | 125 | 110 | 105 | 125 | 100 | 105 | 95 | 65 | 105 |
| Wet grip performance index | 115 | 125 | 105 | 110 | 135 | 100 | 80 | 70 | 60 | 105 |
| Average | 111 | 115 | 113 | 110 | 118 | 100 | 77 | 90 | 85 | 88 |

From the results in Tables 1 and 2, by stipulating a BET specific surface area and a content of silica and a negative rate of a tire, it is understood that an amount of rubber and a grounding surface area with a ground can be controlled by a tire pattern (tread pattern) while enhancing reinforcing property of the rubber with silica, thereby achieving improved wet grip performance and abrasion resistance of the rubber as well as a good fuel efficiency.

EXPLANATION OF NUMERALS

1.    Circumferential groove
1a.   Crown main groove
1b.   Shoulder main groove
2.    Land part
2a.   Crown land part
2b.   Shoulder land part
3.    Width direction groove
W.    Grounding surface width

**Claims**

**1.**  A pneumatic tire comprising a tread,

wherein the tread is formed of a rubber composition comprising 30 to 120 parts by mass of silica having a BET specific surface area of 180 to 280 m$^2$/g based on 100 parts by mass of a rubber component,
wherein a negative rate within a grounding surface width of the tread is 20-40%.

**2.**  The pneumatic tire of claim 1, wherein a content of the silica in the rubber composition is 60 to 120 parts by mass based on 100 parts by mass of the rubber component.

**3.**  The pneumatic tire of claim 1 or 2, wherein the rubber component in the rubber composition comprises a styrene-butadiene rubber and a butadiene rubber.

**4.**  The pneumatic tire of any one of claims 1 to 3, wherein the rubber composition further comprises a silane coupling agent.

**5.**  A pneumatic tire comprising a tread,

wherein the tread is formed of a rubber composition comprising 30 to 120 parts by mass of silica having a BET specific surface area of 180 to 280 m$^2$/g based on 100 parts by mass of a rubber component (excluding a rubber composition comprising a rubber component consisting of 100% by mass of styrene-butadiene rubber),
wherein a negative rate within a grounding surface width of the tread is 20-40%.

**Amended claims under Art. 19.1 PCT**

**1.** A pneumatic tire comprising a tread,

wherein the tread is formed of a rubber composition comprising 30 to 120 parts by mass of silica having a BET specific surface area of 195 to 280 m$^2$/g based on 100 parts by mass of a rubber component, wherein a negative rate within a grounding surface width of the tread is 20-40%.

**2.** The pneumatic tire of claim 1, wherein a content of the silica in the rubber composition is 60 to 120 parts by mass based on 100 parts by mass of the rubber component.

**3.** The pneumatic tire of claim 1 or 2, wherein the rubber component in the rubber composition comprises a styrene-butadiene rubber and a butadiene rubber.

**4.** The pneumatic tire of any one of claims 1 to 3, wherein the rubber composition further comprises a silane coupling agent.

**5.** A pneumatic tire comprising a tread,

wherein the tread is formed of a rubber composition comprising 30 to 120 parts by mass of silica having a BET specific surface area of 195 to 280 m$^2$/g based on 100 parts by mass of a rubber component (excluding a rubber composition comprising a rubber component consisting of 100% by mass of styrene-butadiene rubber), wherein a negative rate within a grounding surface width of the tread is 20-40%.

**Statement under Art. 19.1 PCT**

Claims 1 and 5 are limited by the contents of Paragraph [0033] of the specification. By this amendment, the difference from Documents 1 and 2 is clarified.

That is, the present invention differs from Documents 1 and 2 in that "silica having a BET specific surface area of 195 to 280 m$^2$/g". An effect of the present invention is shown in Tables 1 and 2 of the specification.

# FIG. 1

# FIG. 2

| | | |
|---|---|---|
| **INTERNATIONAL SEARCH REPORT** | International application No. | |
| | PCT/JP2020/015531 | |

**A. CLASSIFICATION OF SUBJECT MATTER**
B60C 1/00(2006.01)i; B60C 11/03(2006.01)i; C08K 3/36(2006.01)i; C08L 21/00(2006.01)i
FI: B60C1/00 A; B60C11/03 Z; C08K3/36; C08L21/00
According to International Patent Classification (IPC) or to both national classification and IPC

**B. FIELDS SEARCHED**

Minimum documentation searched (classification system followed by classification symbols)
B60C1/00; B60C11/03; C08K3/36; C08L21/00

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-193687 A (BRIDGESTONE CORPORATION) 17.11.2016 (2016-11-17) claims, paragraphs [0001]-[0007], [0022]-[0027], [0039]-[0044], [0057]-[0060], [0063]-[0064], [0068]-[0084], fig. 1-4 | 1-5 |
| X | JP 2011-162020 A (BRIDGESTONE CORPORATION) 25.08.2011 (2011-08-25) claims, paragraphs [0012]-[0015], [0032]-[0051] | 1, 4, 5 |
| Y | JP 2011-516630 A (SOCIETE DE TECHNOLOGIE MICHELIN) 26.05.2011 (2011-05-26) claims, paragraphs [0001]-[0004], [0012]-[0015], [0026], [0075]-[0078], [0111]-[0131], [0139]-[0163] | 1-5 |
| Y | JP 2016-33014 A (BRIDGESTONE CORPORATION) 10.03.2016 (2016-03-10) claims, paragraphs [0001], [0022]-[0024], [0030]-[0038] | 1-5 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2020 (09.06.2020) | 23 June 2020 (23.06.2020) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

## INTERNATIONAL SEARCH REPORT

International application No.

PCT/JP2020/015531

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-81303 A (THE YOKOHAMA RUBBER CO., LTD.) 28.03.1995 (1995-03-28) claims, paragraphs [0001]-[0005], [0009]-[0020] | 1-5 |
| P, X | JP 2019-135117 A (THE YOKOHAMA RUBBER CO., LTD.) 15.08.2019 (2019-08-15) paragraphs [0001]-[0017], [0022]-[0031], [0033]-[0046], fig. 2 | 1-5 |
| A | JP 2005-139230 A (SUMITOMO RUBBER INDUSTRIES, LTD.) 02.06.2005 (2005-06-02) entire text | 1-5 |
| A | JP 2006-151244 A (THE YOKOHAMA RUBBER CO., LTD.) 15.06.2006 (2006-06-15) entire text | 1-5 |
| A | JP 2008-50408 A (SUMITOMO RUBBER INDUSTRIES, LTD.) 06.03.2008 (2008-03-06) entire text | 1-5 |
| A | JP 2017-218042 A (SUMITOMO RUBBER INDUSTRIES, LTD.) 14.12.2017 (2017-12-14) entire text | 1-5 |
| A | US 2018/0370288 A1 (COMPAGNIE GENERALE DES ETABLISSEMENTS MICHELIN) 27.12.2018 (2018-12-27) entire text | 1-5 |
| A | US 2012/0132332 A1 (ZHAO, Junling) 31.05.2012 (2012-05-31) entire text | 1-5 |

Form PCT/ISA/210 (continuation of second sheet) (January 2015)

INTERNATIONAL SEARCH REPORT

Information on patent family members

International application No.

PCT/JP2020/015531

| Patent Documents referred in the Report | Publication Date | Patent Family | Publication Date |
|---|---|---|---|
| JP 2016-193687 A | 17 Nov. 2016 | US 2018/0111422 A1 claims, paragraphs [0001]-[0008], [0041]-[0052], [0068]-[0076], [0089]-[0095], [0098]-[0122], [0125]-[0159], fig. 1-4 WO 2016/157906 A1 EP 3279011 A1 CN 107428205 A | |
| JP 2011-162020 A | 25 Aug. 2011 | (Family: none) | |
| JP 2011-516630 A | 26 May 2011 | US 2011/0152405 A1 claims, paragraphs [0001]-[0014], [0040]-[0052], [0125], [0330]-[0342], [0458]-[0511], [0538]-[0654] WO 2009/112463 A1 FR 2928374 A1 CN 101959700 A KR 10-2011-0003471 A EA 201071051 A BR PI0908397 A | |
| JP 2016-33014 A | 10 Mar. 2016 | (Family: none) | |
| JP 7-81303 A | 28 Mar. 1995 | (Family: none) | |
| JP 2019-135117 A | 15 Aug. 2019 | WO 2019/151521 A1 | |
| JP 2005-139230 A | 02 Jun. 2005 | US 2005/0096424 A1 | |
| JP 2006-151244 A | 15 Jun. 2006 | US 2006/0116465 A1 DE 102005057059 A | |
| JP 2008-50408 A | 06 Mar. 2008 | (Family: none) | |
| JP 2017-218042 A | 14 Dec. 2017 | EP 3254872 A1 CN 107471922 A | |
| US 2018/0370288 A1 | 27 Dec. 2018 | WO 2017/109339 A1 FR 3045495 A1 CN 1084 72998 A | |
| US 2012/0132332 A1 | 31 May 2012 | EP 2452834 A2 CN 102529591 A BR PI1106827 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016033014 A